# EUROPEAN PATENT APPLICATION

(11) **EP 2 228 237 A2**
(43) Date of publication of application: **15.09.2010**
(21) Application number: 09015683.7
(22) Date of filing: 18.12.2009
(51) Int. Cl.: B60C 15/024

(54) **Bicycle tire**

(30) Priority: 11.03.2009 US 159279 P; 12.05.2009 US 464780; 12.05.2009 US 464796; 12.05.2009 US 464813
(71) Applicant: Marui Ltd., Chuo-Ku Kobe 650-0022 (JP)
(72) Inventor: Shuji, Kawai, Karumi-ku Kobe (JP)
(74) Representative: Schütte, Hartmut

(57) **Abstract**

A bicycle tire provides a first sidewall and a second sidewall each including an interior portion and an exterior portion. A rim attaching portion including a slipping reduction portion having an extended rim contact surface is connected to an inner circumference of each of the first sidewall and the second sidewall. A tire tread portion is connected to an outer circumference of the first sidewall and the second sidewall. A portion (110) of the first sidewall and the second sidewall proximate to the inner circumference of the first sidewall and the second sidewall on the opposite side of the rim attaching portion from the slipping reduction portion has additional material (210,310) providing a varying thickness.

## Description

### CROSS-REFERENCE TO RELATED APPLICATIONS

This patent application claims priority under 35 U.S.C. § 119(e) of U.S. Provisional Application No. 61/159,279 filed on March 11, 2009, the entire contents of which are hereby incorporated by reference.

### BACKGROUND

### Field of the Invention

The present invention relates generally to tires. In particular, the present invention relates to bicycle tires that reduce the probability of flat tires.

### Background Information

Pinch flatting of tires, such as bicycle tires, occurs when an under-inflated tire makes forceful impact with sharp objects (e.g., rocks, ledges, etc.) causing the tire to quickly compress. During the compression, the inner-tube is pinched between the hard edge of the wheel rim and the object causing the impact, ultimately puncturing the inner-tube and creating a flat tire.

Increasing rigidity of the tire sidewall by increasing thickness of the entire sidewall can reduce tire compression, but problems associated with this include greater overall tire weight and the tire becoming too stiff and losing ability to conform to the terrain/surface, which is necessary for better traction, and also increases cost of production and/or material.

Liners can be applied to the inside of the tire to disperse force from the concentrated area, but have a disadvantage of large cost increase. Tubeless tire systems do not have inner-tubes to pinch, but converting a tube type of tire to a tubeless system requires the expense of new rims designed specifically for tubeless tires, and purchasing tires exclusively designed to work with tubeless rims. The rim lip can be shaped differently to disperse force from a concentrated area, but this has a major disadvantage of increasing cost for replacing an entire rim.

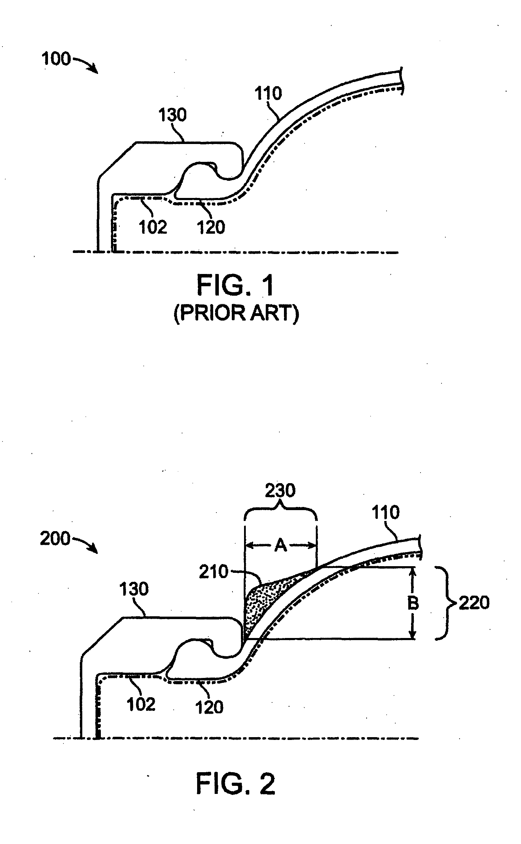

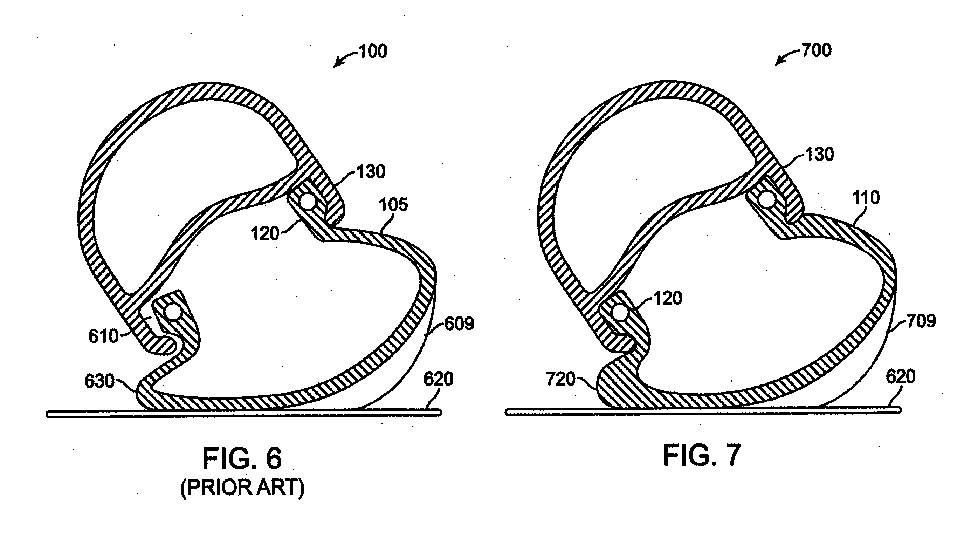

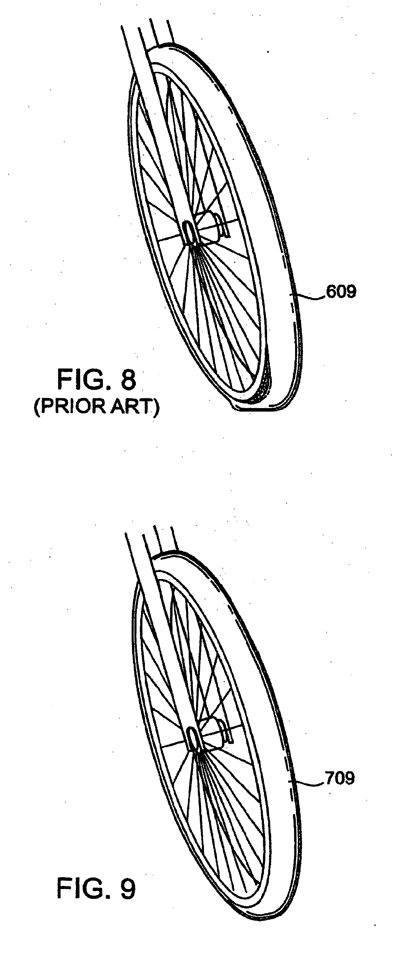

Clincher tires may unintentionally "pop" off the rim, which is known as roll-off. **FIG. 1** and FIG. 6 illustrate tire and rim system 100 including a clincher tire with sidewall portion 105 and rim 130. Tube 102 is shown in dashed lines for illustration for systems that include tubes (i.e., not tubeless). A clincher bicycle tire having sidewall portion 105 fits onto the rim 130 where the bead 120 of the tire engages (or hooks onto) the inside lip of the rim 130, then the tire is inflated either by inflating the inner-tube 102 or directly into the tire in a tubeless system in order to pressure seal the engagement between tire sidewall and rim 130. While the tire sidewall portion 105 is designed to deform in shape in certain circumstances either from leaning a bicycle during maneuvering or cornering, the tire sidewall portion 105 can become deformed to a point where the likelihood of the tire separating from the rim 130 is increased. The unintended separation of the bead from the rim (area 610 separating from area 130, i.e., roll-off) is shown in FIG. 6 and FIG. 8 and is highly undesirable because of the sudden loss of traction and control.

Tubular clincher tires claim to eliminate tire roll-off when properly installed, but one problem is that tubular tires (having the tube sewn directly into the tire) are difficult to repair if punctured and likely require replacement of the complete tire. Also, manufacturing tubular tires is more labor intensive and thus more costly.

Another problem that can arise with bicycle tires is when a tire spins independently from the rim, which is known as "slipping." For bicycle braking systems designed to stop a wheel, above certain speed thresholds, applying brakes (which are designed to stop the rim/wheel) does not stop the momentum of the tire. Therefore, the tire continues to spin independently from the rim. When this "slip" occurs, it causes less control and safety for a rider. This "slipping" condition may occur both in tube and tubeless tires as well. Because of the friction between the tire and inner-tube in a tube tire system, "slipping" ultimately causes movement of the inner-tube thereby ripping the inner-tube valve stem that is inserted through the rim, which causes a flat.

Converting to a tubeless tire system, where tire slipping does not cause flats, has the drawbacks noted above in that converting tire systems from a tube to a tubeless system requires the expense of new rims designed specifically for tubeless tires, and purchasing tires exclusively designed to work with tubeless rims.

### BRIEF SUMMARY

In a first aspect the present invention provides a bicycle tire including a first sidewall and a second sidewall each including an interior portion and an exterior portion. A rim attaching portion including a slipping reduction portion having an extended rim contact surface is connected to an inner circumference of each of the first sidewall and the second sidewall. A tire tread portion is connected to an outer circumference of the first sidewall and the second sidewall. A portion of the first sidewall and the second sidewall proximate to the inner circumference of the first sidewall and the second sidewall on the opposite side of the rim attaching portion from the slipping reduction portion has additional material providing a varying thickness.

In a second aspect the present invention provides a bicycle tire and rim assembly including a rim and a tire. The tire comprises a first sidewall and a second sidewall each including an interior portion and an exterior portion, a rim attaching portion including means for reducing slipping coupled to an inner circumference of each of the first sidewall and the second sidewall; and cushioning means adjacent the rim attaching portion for preventing pinching a tube against the rim during compression.

In a third aspect the present invention provides a bicycle tire and rim assembly including a rim and a tire. The tire comprising: a first sidewall and a second sidewall each including an interior portion and an exterior portion, a rim attaching portion including means for reducing slipping coupled to an inner circumference of each of the first sidewall and the second sidewall; and means adjacent the rim attaching portion for preventing the tire from rolling off the rim during lateral twisting forces between the rim and tire.

In a fourth aspect the present invention provides a bicycle tire and rim assembly including a rim and a tire. The tire comprising: a first sidewall and a second sidewall each including an interior portion and an exterior portion, a rim attaching portion including means for reducing slipping coupled to an inner circumference of each of the first sidewall and the second sidewall; and means adjacent the rim attaching portion for preventing pinching a tube against the rim during compression and means for preventing the tire from rolling off the rim during lateral twisting forces between the rim and tire.

Other aspects and advantages of the present invention will become apparent from the following detailed description, which, when taken in conjunction with the drawings, illustrate, by way of example, the principles of the invention.

A bicycle tire according to the invention may comprise a first sidewall and a second sidewall each including an interior portion and an exterior portion, a rim attaching portion including a slipping reduction portion having an extended rim contact surface coupled to an inner circumference of each of the first sidewall and the second sidewall. Further a tire tread portion coupled to an outer circumference of the first sidewall and the second sidewall is provided, wherein a portion of the first sidewall and the second sidewall proximate to said inner circumference of the first sidewall and the second sidewall on the opposite side of the rim attaching portion from said slipping reduction portion has additional material providing a varying thickness.
In a preferred embodiment the varying thickness is provided on the exterior portion of the first sidewall and the second sidewall. It is also possible to provide the varying thickness on the interior portion of the first sidewall and the second sidewall.

According to a preferred solution the varying thickness is provided on both the interior portion and the exterior portion of the first sidewall and the second sidewall.

The varying thickness is preferably formed by a first additional material added to the exterior portion of the first sidewall and the second sidewall proximate to the inner circumference of the first sidewall and the second sidewall.

The varying thickness may be formed by a second additional material added to the interior portion of the first sidewall and the second sidewall proximate to the inner circumference of the first sidewall and the second sidewall.

Preferably the varying thickness is formed by a first additional material added to the exterior portion of the first sidewall and the second sidewall proximate to the inner circumference of the first sidewall and the second sidewall, and by a second additional material added to the interior portion of the first sidewall and the second sidewall proximate to the inner circumference of the first sidewall and the second sidewall.

The second additional material may be configured to prevent pinching of an inner tube during compression to the tire.

Preferably the first additional material is configured to prevent the tire from rolling off of a rim during compression of the tire.

In all embodiments the slipping reduction portion is preferably configured to reduce an amount that the rim attaching portion slips on the rim during braking. The slipping reduction portion may be configured to press against an internal wall of the rim via air pressure.

Accoding to preferred embodiments the second additional material is configured to prevent pinching of an inner tube during compression and lateral force to the tire, the first additional material is configured to prevent the tire from rolling off of a rim during compression and lateral force to the tire, and the slipping reduction portion reduces the rim attaching portion from slipping on the rim during braking.

In all embodiments the first additional material may be made of the same material as the sidewall. The first additional material can also be is made of different material than the sidewall.

The second additional material may be made of different material than the sidewall.

Preferably the slipping reduction material is made of the same material as the sidewall, but can also be made of different material than the sidewall.

The first additional material has preferably a length on the exterior portion of the first sidewall and the second sidewall between 1.0mm and 23.0mm.

The second additional material may preferably have a length on the interior portion of the first sidewall and the second sidewall between 1.0mm and 25.0mm.

The slipping reduction material preferably has a length between 1.0mm and 20.0mm.

The invention is also directed to a bicycle tire and rim assembly comprising a rim and a tire comprising a first sidewall and a second sidewall each including an interior portion and an exterior portion, a rim attaching portion including means for reducing slipping coupled to an inner circumference of each of the first sidewall and the second sidewall. The tire further comprises cushioning means adjacent the rim attaching portion for preventing pinching a tube against the rim during compression.

The bicycle tire and rim assembly may further comprise a tire tread portion coupled to an outer circumference of the first sidewall and the second sidewall.

The inner portion of the first sidewall and the second sidewall proximate to the inner circumference of the first sidewall and the second sidewall may have a varying thickness.

Means for reducing slipping may be configured to reduce an amount that the rim attaching portion slips on the rim during braking.

The bicycle tire and rim assembly may comprise a rim and a tire comprising a first sidewall and a second sidewall each including an interior portion and an exterior portion, a rim attaching portion including means for reducing slipping coupled to an inner circumference of each of the first sidewall and the second sidewall, and means adjacent the rim attaching portion for preventing the tire from rolling off the rim during lateral twisting forces between the rim and tire.

The exterior portion of the first sidewall and the second sidewall proximate to the inner circumference of the first sidewall and the second sidewall may have a varying thickness.

The means for reducing slipping is preferably configured to reduce an amount that the rim attaching portion slips on the rim during braking.

A bicycle tire and rim assembly according to the invention may further comprise a rim, and a tire comprising a first sidewall and a second sidewall each including an interior portion and an exterior portion, a rim attaching portion including means for reducing slipping coupled to an inner circumference of each of the first sidewall and the second sidewall, and means adjacent the rim attaching portion for preventing pinching a tube against the rim during compression and means for preventing the tire from rolling off the rim during lateral twisting forces between the rim and tire.

The interior portion and the exterior portion of the first sidewall and the second sidewall proximate to the inner circumference of the first sidewall and the second sidewall preferably each has a varying thickness, and the means for reducing slipping is configured to reduce an amount that the rim attaching portion slips on the rim during braking.

### BRIEF DESCRIPTION OF THE SEVERAL VIEWS OF THE DRAWINGS

For a fuller understanding of the nature and advantages of the invention, as well as a preferred mode of use, reference should be made to the following detailed description read in conjunction with the accompanying drawings, in which:
- **FIG. 1**: illustrates a typical clincher tire and rim system;
- **FIG. 2**: illustrates an improved tire coupled to a rim in accordance with one embodiment of the invention;
- **FIG. 3**: illustrates an improved tire coupled to a rim in accordance with another embodiment of the invention;
- **FIG. 4**: illustrates an improved tire coupled to a rim in accordance with yet another embodiment of the invention;
- **FIG. 5**: illustrates an improved tire coupled to a rim in accordance with still another embodiment of the invention;
- **FIG. 6**: illustrates a typical tire rolling off a rim during compression of the tire;
- **FIG. 7**: illustrates an improved tire remaining on a rim during compression and lateral force of the tire according to an embodiment of the invention;
- **FIG. 8**: illustrates a typical bicycle with the tire rolling off the rim during twisting of the tire relative to the rim due to torque or other twisting forces between the tire and rim;
- **FIG. 9**: illustrates a bicycle with the tire remaining on the rim during applied compression and lateral force to the tire according to one embodiment of the invention;
- **FIG. 10**: illustrates an improved tire coupled to a rim in accordance with another embodiment of the invention;
- **FIG. 11A**: illustrates a bicycle including the embodiment of the invention illustrated in **FIG. 2****;**
- **FIG. 11B**: illustrates a front sectional view of the embodiment illustrated in **FIG. 11A****;**
- **FIG. 12A**: illustrates a bicycle including the embodiment of the invention illustrated in **FIG. 3****;**
- **FIG. 12B**: illustrates a front sectional view of the embodiment illustrated in **FIG. 12A****;**
- **FIG.13A**: illustrates a bicycle including the embodiment of the invention illustrated in **FIG. 4****;**
- **FIG. 13B**: illustrates a front sectional view of the embodiment illustrated in **FIG. 13A****;**
- **FIG.14A**: illustrates a bicycle including the embodiment of the invention illustrated in **FIG. 5****;**
- **FIG. 14B**: illustrates a front sectional view of the embodiment illustrated in **FIG. 14A****;**
- **FIG. 15A**: illustrates a bicycle including the embodiment of the invention illustrated in **FIG. 10****;** and
- **FIG. 15B**: illustrates a front sectional view of the embodiment illustrated in **FIG. 15A****.**

### DETAILED DESCRIPTION

The following description is made for the purpose of illustrating the general principles of the invention and is not meant to limit the inventive concepts claimed herein. Further, particular features described herein can be used in combination with other described features in each of the various possible combinations and permutations. Unless otherwise specifically defined herein, all terms are to be given their broadest possible interpretation including meanings implied from the specification as well as meanings understood by those skilled in the art and/or as defined in dictionaries, treatises, etc.

The description may disclose several preferred embodiments for tires, as well as operation and/or component parts thereof. While the following description will be described in terms of bicycle tires for clarity and to place the invention in context, it should be kept in mind that the teachings herein may have broad application to all types of tire systems, devices and applications.

**FIG. 2** illustrates a system 200 including a tire including sidewall portion 110 attached to a rim 130 according to an embodiment of the invention. In this embodiment of the invention, the tire is formed with an additional material 210 formed in the sidewall of the tire. Additional material 210 may comprise a separate material from the tire material bonded or integrated thereto, or may be additional material of the same type. In some embodiments of the invention, the additional material 210 is only added to the portion of the tire that is near the inner circumference portion of the exterior of the sidewall before the bead portion 120 (i.e., rim coupling portion). In one embodiment, the additional material 210 varies in thickness from its beginning to end in a "hump" or "hill" shape. In one embodiment of the invention, the amount of additional material 210 can be determined based on a volumetric equation determined by length, width, and height (i.e., thickness) dimensions throughout the additional material.

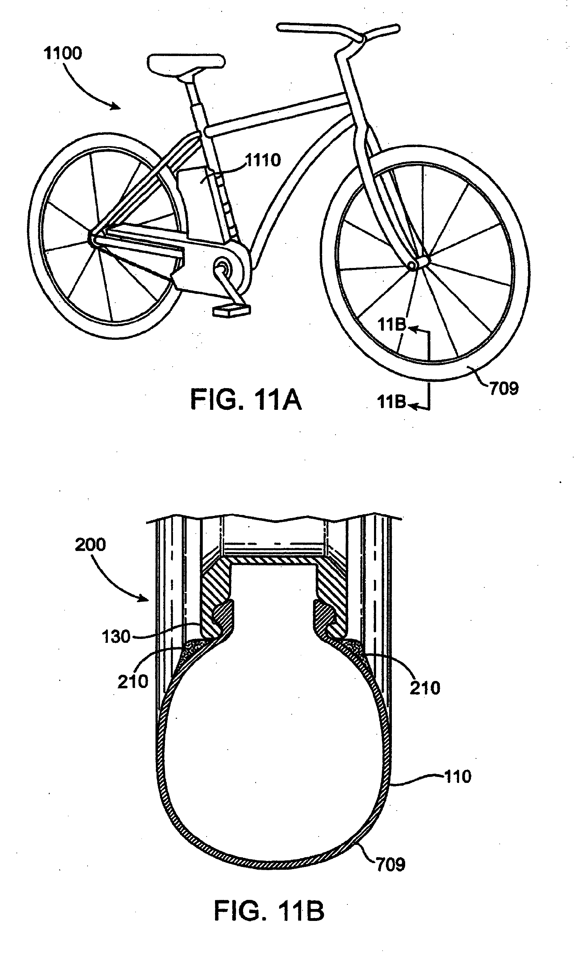

In some embodiments of the invention the additional material 210 allows the tire to compress normally during use (e.g., with a bicycle, a motorized bicycle, carts, etc.), but beyond a particular threshold or range of compression, the additional material 210 performs as a "bumper" to control further compression of the tire. It should be noted that with additional weight, such as from a motor driven bicycle (see, e.g., **FIG. 11A-B**), compression of the tire occurs easier than with lighter loads, for example a typical non-motorized bicycle with a rider having an average weight. As the tire compresses into the rim 130, the additional material 210 on the tire adjacent to the edge of the rim 130 minimizes further compression, as well as alters the path of tire compression to prevent an inner-tube 102 from being pinched by the rim edges and the object causing the tire compression.

In one embodiment of the invention the additional material 210 incorporated onto the exterior of the sidewall of the tire sets a limit that the tire is able to deform under riding conditions that cause additional twisting of the tire relative to the rim due to torque or other twisting forces between the tire and rim, and asymmetric tire compression, such as cornering with additional weight, striking a sharp object, running over a pot hole, etc. The additional material 210 acts as structural reinforcement on the sidewall of the tire close to the edge of the rim 130, which allows tire deformity as intended and only becomes active when tire deformity reaches the threshold, in which case the reinforcement restricts further tire deformity to prevent roll-off.

In some embodiments of the invention the additional material 210 is only incorporated at the inner circumference of the external tire sidewall before the bead portion and next to the rim 130 edge. Therefore, the embodiments of the invention reduce overall tire weight in comparison to adding additional thickness to the whole exterior tire sidewall or complete tire. The embodiments of the invention still allow for similar level of tire compression to the sidewall portion 110 as a typical tire tread, such as tire sidewall portion 105, for better tire traction and are less expensive to produce as compared to reinforcing the entire sidewall of the tire.

**Table I** provides ranges of length for distance A 230 and distance B 220 for the additional material 210 for different tire sizes. It should be noted that other embodiments of the invention may have different maximum and preferred ranges of length based on the application and desired compression threshold. It should also be noted that the thickness of the additional material 210 may be adjusted for different compression thresholds.

**Table I**

| | A | | B | |
|---|---|---|---|---|
| Tire Size | Maximum | Preferred | Maximum | Preferred |
| 20" | 23.0mm | 1.0-10.0mm | 10.0mm | 1.0-6.0mm |
| 24" | 24.0mm | 1.0-10.0mm | 13.0mm | 1.0-6.0mm |
| 26" | 24.0mm | 1.0-10.0mm | 13.0mm | 1.0-6.0mm |
| 700C | 18.0mm | 1.0-10.0mm | 10.0mm | 1.0-6.0mm |

Because the additional material 210 is incorporated into the tire sidewall, time, effort and money can be saved due to not having to purchase and install a liner to the inside of the tire. For consumers that do not already have a tubeless tire system, the embodiments of the invention provide pinch flat protection without having to replace their entire wheel. Additionally, the tire including the additional material 210 is compatible with conventional clincher rims and, therefore, does not require any additional expense of changing rims.

Since tubular clincher tires are difficult to repair if punctured and require tubular specific repair kits, the embodiments of the invention allow for tire repair using conventional clincher tire repair techniques as the tire with additional material 210 is applicable to conventional clincher rims and does not require the added expense of purchasing and replacing the clincher type rim with a tubeless specific rim.

In some embodiments of the invention the tire and additional material may be made out of various compounds of rubber, rubber compounds mixed with additional materials, such as Kevlar® chips, nylon chips, cotton-chips, various fibers, etc. It should be noted that conventional manufacturing techniques may be used to form, mold, extrude, etc. the tire including the additional material 210.

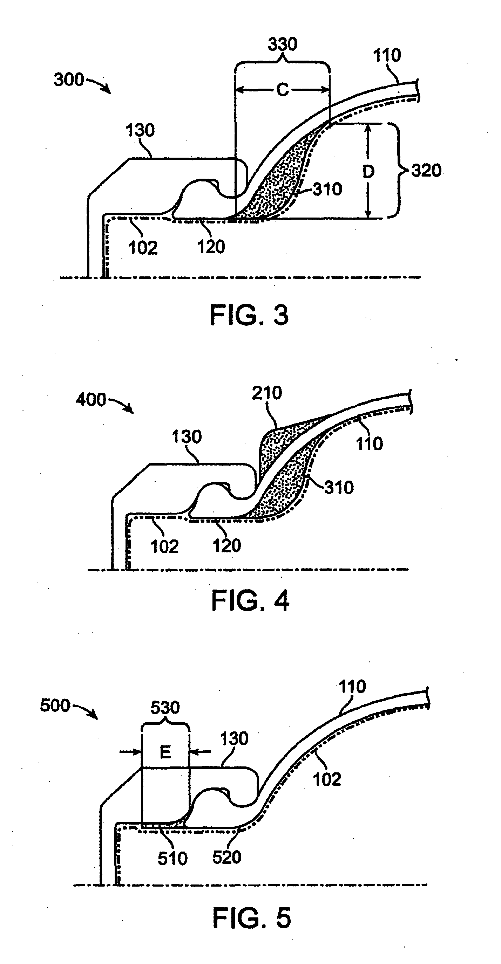

**FIG. 3** illustrates a system 300 including a tire attached to a rim 130 according to another embodiment of the invention. In this embodiment of the invention, the sidewall of the tire is formed with an additional material 310 formed in the interior sidewall of the tire. In some embodiments of the invention, the additional material 310 is only added to the portion of the sidewall of the tire that is near the inner circumference of the interior side of the sidewall before the bead portion 120. In one embodiment, the additional material 310 varies in thickness from its beginning to end in a "hump" or "hill" shape, with an outer perimeter having a serpentine shape. In one embodiment of the invention, the amount of additional material 310 can be determined based on a volumetric equation determined by length, width, and height (i.e., thickness) dimensions throughout the additional material.

In some embodiments of the invention the additional material 310 allow the tire to compress normally during use (e.g., with a bicycle, a motorized bicycle, carts, etc.), but beyond a particular threshold or range of compression and lateral force, the additional material 310 performs as a "bumper" to control further compression of the tire. It should be noted that with additional weight, such as from a motor driven bicycle, compression of the tire occurs easier than with lighter loads, for example a typical non-motorized bicycle with a rider having an average weight. As the tread portion of the tire compresses (and changes shape due to lateral force) into the rim 130, the additional material 310 on the tire adjacent to the edge of the rim 130 on the interior of the sidewall before the bead portion 120 minimizes further compression, as well as alters the path of tire compression to prevent an inner-tube 102 from being pinched ("pinching") by the rim edges and the object causing the tire compression.

In one embodiment of the invention the additional material 310 incorporated onto the internal sidewall of the tire sets a limit that the tire is able to deform under riding conditions that cause additional compression and lateral force, such as cornering with additional weight, striking a sharp object, running over a pot hole, etc. The additional material 310 acts as structural reinforcement on the sidewall of the tire close to the edge of the rim 130, which allows tire deformity as intended and only becomes active when tire deformity reaches the threshold, in which case the reinforcement restricts further tire deformity to prevent pinching.

In some embodiments of the invention the additional material 310 is only incorporated at the inner circumference of the side wall portion of the internal tire sidewall before the bead portion 120 and next to the rim 130 edge. Therefore, the embodiments of the invention reduce overall tire weight in comparison to adding additional thickness to the whole outer tire sidewall or complete tire. The embodiments of the invention still allow for similar level of tire compression as a typical tire tread portion, such as tire sidewall portion 105, for better tire traction and are less expensive to produce as compared to reinforcing the entire sidewall of the tire.

**Table II** provides ranges of length for distance C 330 and distance D 320 for the additional material 310 for different tire sizes. It should be noted that other embodiments of the invention may have different maximum and preferred ranges of length based on the application and desired compression threshold. It should also be noted that the thickness of the additional material 310 may be adjusted for different compression thresholds.

**Table II**

| | C | | D | |
|---|---|---|---|---|
| Tire Size | Maximum | Preferred | Maximum | Preferred |
| 20" | 25.0mm | 1.0-12.0mm | 14.0mm | 1.0-8.0mm |
| 24" | 26.0mm | 1.0-12.0mm | 17.0mm | 1.0-8.0mm |
| 26" | 26.0mm | 1.0-12.0mm | 17.0mm | 1.0-8.0mm |
| 700C | 20.0mm | 1.0-12.0mm | 14.0mm | 1.0-8.0mm |

Because the additional material 310 is incorporated into the tire, time, effort and money can be saved due to not having to purchase and install a liner to the inside of the tire. For consumers that do not already have a tubeless tire system, the embodiments of the invention provide pinch flat protection without having to replace their entire wheel. Additionally, the tire including the additional material 310 is compatible with conventional clincher rims and, therefore, does not require any additional expense of changing rims.

Since tubular clincher tires are difficult to repair if punctured and require tubular specific repair kits, the embodiments of the invention allow for tire repair using conventional clincher tire repair techniques as the tire with additional material 310 is applicable to conventional clincher rims and does not require the added expense of purchasing and replacing the clincher type rim with a tubeless specific rim.

In some embodiments of the invention the tire and additional material 310 may be made out of various compounds of rubber, rubber compounds mixed with additional materials, such as Kevlar® chips, nylon chips, cotton-chips, various fibers, etc. It should be noted that conventional manufacturing techniques may be used to form, mold, extrude, etc. the tire including the additional material 310.

**FIG. 4** illustrates system 400 including a tire with a sidewall portion 110, additional material 210 and additional material 310 according to one embodiment of the invention. In this embodiment of the invention, the additional material 210 and the additional material 310 both operate together to set a limit that the tire is able to deform under riding conditions that cause additional compression and lateral force, such as cornering with additional weight, striking a sharp object, running over a pot hole, etc. The additional material 210 and additional material 310 act in tandem as structural reinforcement on the sidewall of the tire close to the edge of the rim 130, which allows tire deformity as intended and only becomes active when tire deformity reaches the threshold, in which case the reinforcement restricts further tire deformity to prevent roll-off via additional material 210 and pinching via additional material 210 and/or 310.

**FIG. 5** illustrates a system 500 including a tire with sidewall portion 110 attached to a rim 130 according to another embodiment of the invention. In this embodiment of the invention, the tire is formed with an additional material 510 in the tire. In some embodiments of the invention, the additional material 510 is only added to the portion of the tire at the end of bead 520. The additional material 510 extending from the bead of the tire when mounted onto the rim 130, rests against the inner sidewall of the rim 130, directly below the engagement of the rim and bead of the tire. When the tire is inflated, the air pressure pushes the extended material into the sidewall of the rim 130, which increases surface contact and friction force between the tire and the rim 130 and minimizes tire slipping. The air pressure may be supplied by a tire with a tube or a tubeless tire as well. In one embodiment, the additional material 510 has a portion that has a continuous shape and another portion that varies in shape, so that the additional material 510 may have a "duck bill" shape. In one embodiment of the invention, the amount of additional material 510 can be determined based on a volumetric equation determined by length, width, and height (i.e., thickness) dimensions throughout the additional material.

In one embodiment of the invention, the additional material 510 is only incorporated at the end of bead portion 520 and next to the inner sidewall of the rim 130. Therefore, the embodiments of the invention reduce overall tire weight in comparison to adding additional thickness to the whole outer tire sidewall or complete tire.

**Table III** provides ranges of length for distance E 330 for the additional material 510 for different tire sizes. It should be noted that other embodiments of the invention may have different maximum and preferred ranges of length based on the application and desired slipping force threshold. It should also be noted that the thickness of the additional material 510 may be adjusted for different compression thresholds.

**Table III**

| | E | |
|---|---|---|
| Tire Size | Maximum | Preferred |
| 20" | 20.0mm | 1.0-10.0mm |
| 24" | 20.0mm | 1.0-10.0mm |
| 26" | 20.0mm | 1.0-10.0mm |
| 700C | 20.0mm | 1.0-10.0mm |

Because the additional material 510 is incorporated into the tire, the tire including the additional material 510 is compatible with conventional clincher rims and, therefore, does not require any additional expense of changing rims.

Since tubular clincher tires are difficult to repair if punctured and require tubular specific repair kits, the embodiments of the invention allow for tire repair using conventional clincher tire repair techniques as the tire with additional material 510 is applicable to conventional clincher rims and does not require the added expense of purchasing and replacing the clincher type rim with a tubeless specific rim.

In some embodiments of the invention the tire and additional material 510 may be made out of various compounds of rubber, rubber compounds mixed with additional materials, such as Kevlar® chips, nylon chips, cotton-chips, various fibers, etc. It should be noted that conventional manufacturing techniques may be used to form, mold, extrude, etc. the tire including the additional material 510.

Some embodiments may incorporate any combination of embodiments from **FIGS. 2****,** **3, 4** and **5****.** That is, additional material 210, additional material 310, and additional material 510 can be included in embodiments of the invention in any combination.

**FIG. 6** illustrates a conventional tire having a sidewall 105 attached to a rim 130. As illustrated, the tire tread portion 609 is being compressed (e.g., from additional weight of a motor, rider, etc.) and undergoing lateral force from friction as the tire is angled (as in a turn) against a ground surface. In this situation, the tire has its bead 610 separating from the rim 130 (i.e., rolling off) as the tire only has a standard homogeneous sidewall 630 that is deforming from the compression force.

**FIG. 7** illustrates tire attached to a rim 130 according to the embodiments of the invention. As illustrated, the tire tread portion 709 is being compressed (e.g., from additional weight of a motor, rider, etc.) and undergoing lateral force from friction as the tire is angled (as in a turn) against a ground surface. In this situation, the tire has its bead 120 remaining in contact with the rim 130 as the tire has a sidewall 110 and 720 that has additional support from additional material 210 that prevents deforming of the tire from the compression force.

**FIG. 8** illustrates a typical tire attached to a rim where the tire wall is separating from the rim due to compression and lateral force (i.e., roll-off) as in **FIG. 6****.**

**FIG. 9** illustrates a tire according to an embodiment of the invention going through the same compression as with the tire in **FIG 8****.** Due to the incorporation of the additional material (e.g., additional material 210, additional material 310, additional material 510, or any combination), the tire remains on the rim during the same compression and lateral force that would cause the tire to separate from the rim as shown in **FIGS. 6** and **8****.**

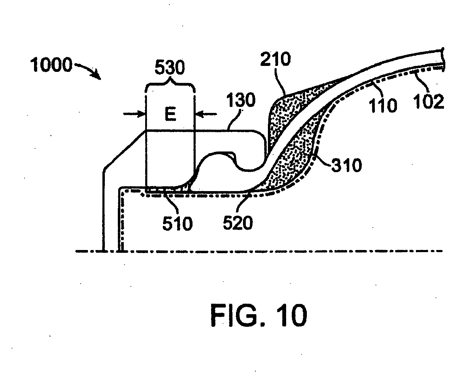

**FIG. 10** illustrates an embodiment 1000 including a combination of the embodiments illustrated in **FIGS. 2****,** **3** and **5** that prevents roll-off, pinching as well as slipping, as previously described.

**FIG. 11A** illustrates an example bicycle 1100 including system 200 illustrated in **FIG. 2** and **FIG.11B****.** As illustrated the bicycle 1100 includes a motor 1110 (e.g., an electric motor, a gas motor, a gas/electric motor, etc.) that adds additional weight to the bicycle.

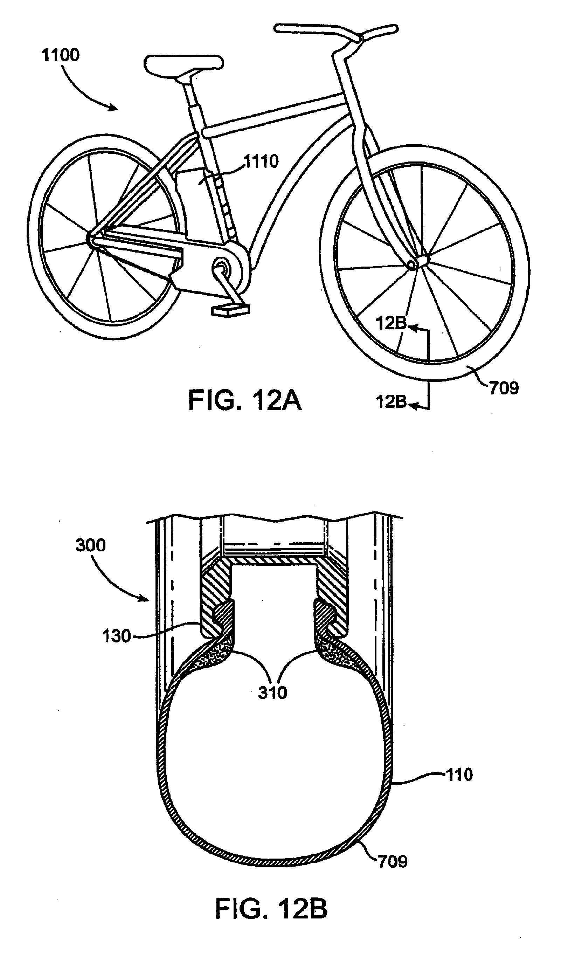

**FIG. 12A** illustrates an example bicycle 1100 including system 300 illustrated in **FIG. 3** and **FIG. 12B****.** As illustrated the bicycle 1100 includes a motor 1110 (e.g., an electric motor, a gas motor, a gas/electric motor, etc.) that adds additional weight to the bicycle.

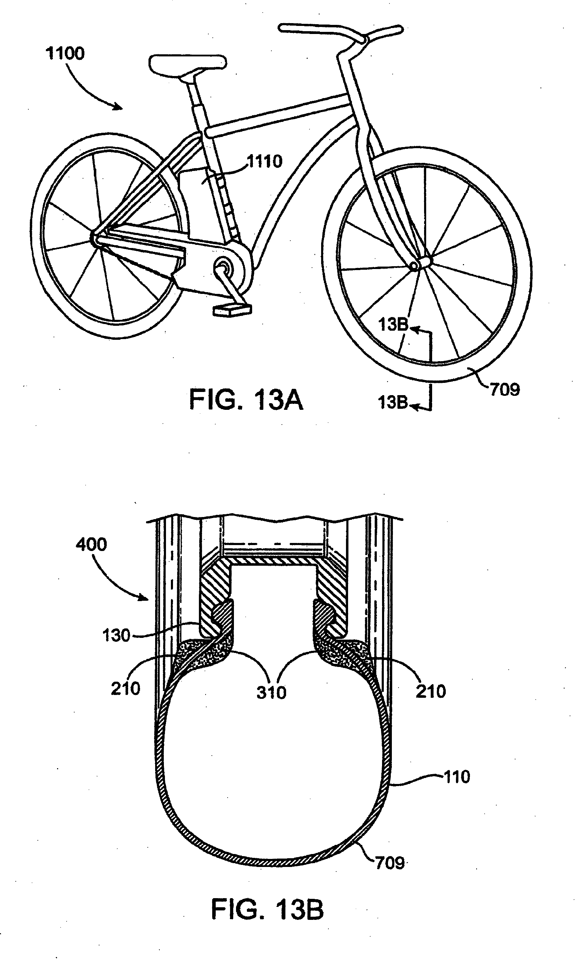

**FIG. 13A** illustrates an example bicycle 1100 including system 400 illustrated in **FIG. 4** and **FIG. 13B****.** As illustrated the bicycle 1100 includes a motor 1110 (e.g., an electric motor, a gas motor, a gas/electric motor, etc.) that adds additional weight to the bicycle.

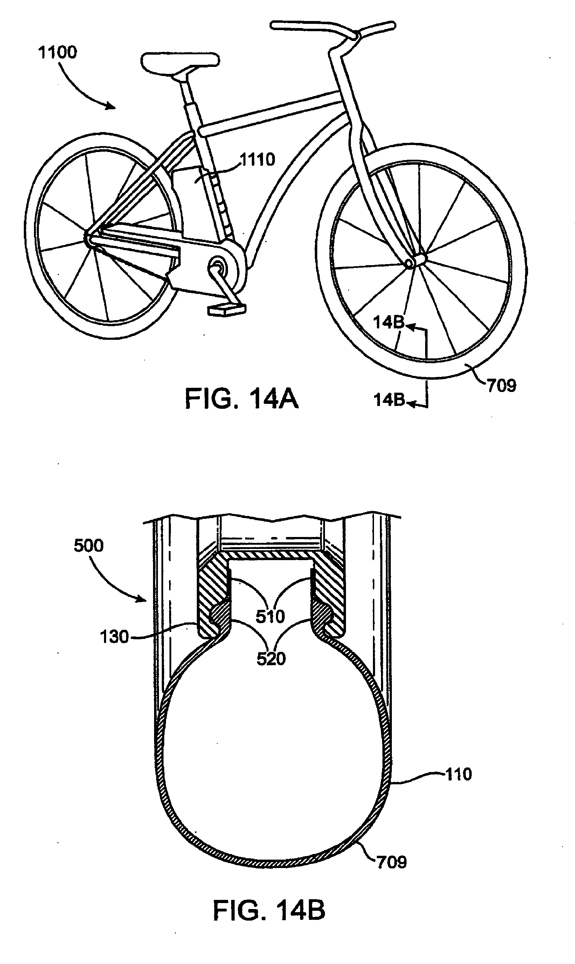

**FIG. 14A** illustrates an example bicycle 1100 including system 500 illustrated in **FIG. 5** and **FIG. 14B****.** As illustrated the bicycle 1100 includes a motor 1110 (e.g., an electric motor, a gas motor, a gas/electric motor, etc.) that adds additional weight to the bicycle.

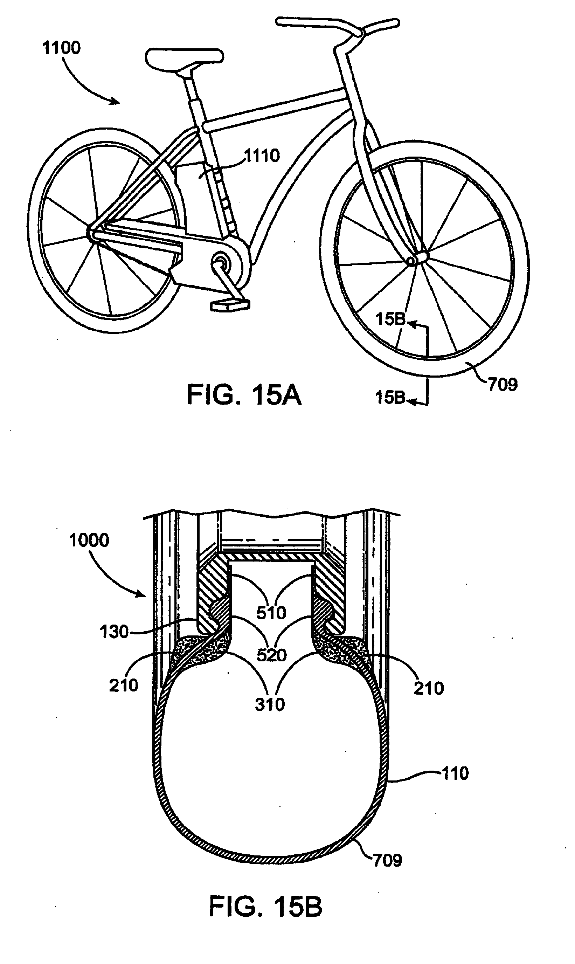

**FIG. 15A** illustrates an example bicycle 1100 including system 1000 illustrated in **FIG. 10** and **FIG. 15B****.** As illustrated the bicycle 1100 includes a motor 1110 (e.g., an electric motor, a gas motor, a gas/electric motor, etc.) that adds additional weight to the bicycle.

In the description above, numerous specific details are set forth. However, it is understood that embodiments of the invention may be practiced without these specific details. For example, well-known equivalent components and elements may be substituted in place of those described herein, and similarly, well-known equivalent techniques may be substituted in place of the particular techniques disclosed. In other instances, well-known structures and techniques have not been shown in detail to avoid obscuring the understanding of this description.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may", "might", or "could" be included, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

While certain exemplary embodiments have been described and shown in the accompanying drawings, it is to be understood that such embodiments are merely illustrative of, and not restrictive on, the broad invention, and that this invention not be limited to the specific constructions and arrangements shown and described, since various other modifications may occur to those ordinarily skilled in the art.

## Claims

1. A bicycle tire comprising:
a first sidewall and a second sidewall each including an interior portion and an exterior portion,
a rim attaching portion including a slipping reduction portion having an extended rim contact surface coupled to an inner circumference of each of the first sidewall and the second sidewall; and
a tire tread portion coupled to an outer circumference of the first sidewall and the second sidewall,
wherein a portion of the first sidewall and the second sidewall proximate to said inner circumference of the first sidewall and the second sidewall on the opposite side of the rim attaching portion from said slipping reduction portion has additional material providing a varying thickness.

2. The bicycle tire of claim 1, wherein the varying thickness is provided on the exterior portion of the first sidewall and the second sidewall and/or wherein the varying thickness is provided on the interior portion of the first sidewall and the second sidewall.

3. The bicycle tire of claim 1 or 2, wherein the varying thickness is provided on both the interior portion and the exterior portion of the first sidewall and the second sidewall.

4. The bicycle tire of claim 1, 2 or 3, wherein the varying thickness is formed by a first additional material added to the interior and/or exterior portion of the first sidewall and the second sidewall proximate to the inner circumference of the first sidewall and the second sidewall.

5. The bicycle tire of claim 3 or 4, wherein the varying thickness is formed by a first additional material added to the exterior portion of the first sidewall and the second sidewall proximate to the inner circumference of the first sidewall and the second sidewall, and by a second additional material added to the interior portion of the first sidewall and the second sidewall proximate to the inner circumference of the first sidewall and the second sidewall.

6. The bicycle tire of claim 5, wherein the second additional material is configured to prevent pinching of an inner tube during compression and lateral force to the tire, the first additional material is configured to prevent the tire from rolling off of a rim during compression and lateral force to the tire, and the slipping reduction portion reduces the rim attaching portion from slipping on the rim during braking.

7. The bicycle tire of claim 4, 5 or 6, wherein the first additional material has a length on the exterior portion of the first sidewall and the second sidewall between 1.0mm and 23.0mm.

8. The bicycle tire of claim 5, 6 or 7, wherein the second additional material has a length on the interior portion of the first sidewall and the second sidewall between 1.0mm and 25.0mm.

9. The bicycle tire of any of the preceding claims, wherein the slipping reduction material has a length between 1.0mm and 20.0mm.

10. A bicycle tire and rim assembly comprising:
a rim; and
a tire comprising:
a first sidewall and a second sidewall each including an interior portion and an exterior portion,
a rim attaching portion including means for reducing slipping coupled to an inner circumference of each of the first sidewall and the second sidewall; and
cushioning means adjacent the rim attaching portion for preventing pinching a tube against the rim during compression.

11. The bicycle tire and rim assembly of claim 10, further comprising a tire tread portion coupled to an outer circumference of the first sidewall and the second sidewall.

12. The bicycle tire and rim assembly of claim 10 or 11, wherein the inner portion of the first sidewall and the second sidewall proximate to the inner circumference of the first sidewall and the second sidewall has a varying thickness.

13. A bicycle tire and rim assembly comprising:
a rim; and
a tire comprising:
a first sidewall and a second sidewall each including an interior portion and an exterior portion,
a rim attaching portion including means for reducing slipping coupled to an inner circumference of each of the first sidewall and the second sidewall; and
means adjacent the rim attaching portion for preventing the tire from rolling off the rim during lateral twisting forces between the rim and tire.

14. A bicycle tire and rim assembly comprising:
a rim; and
a tire comprising:
a first sidewall and a second sidewall each including an interior portion and an exterior portion,
a rim attaching portion including means for reducing slipping coupled to an inner circumference of each of the first sidewall and the second sidewall; and
means adjacent the rim attaching portion for preventing pinching a tube against the rim during compression and means for preventing the tire from rolling off the rim during lateral twisting forces between the rim and tire.

15. The bicycle tire and rim assembly of claim 14, wherein the interior portion and the exterior portion of the first sidewall and the second sidewall proximate to the inner circumference of the first sidewall and the second sidewall each has a varying thickness, and the means for reducing slipping is configured to reduce an amount that the rim attaching portion slips on the rim during braking.
